Europäisches Patentamt

European Patent Office

Office européen des brevets

(19)

(11) Veröffentlichungsnummer: **0 242 765**
**A2**

(12) # EUROPÄISCHE PATENTANMELDUNG

(21) Anmeldenummer: **87105455.7**

(22) Anmeldetag: **13.04.87**

(51) Int. Cl.⁴: **G06F 15/16**

(30) Priorität: **21.04.86 DD 289394**

(43) Veröffentlichungstag der Anmeldung:
**28.10.87 Patentblatt 87/44**

(84) Benannte Vertragsstaaten:
**AT BE CH DE FR GB IT LI NL**

(71) Anmelder: **VEB Elektroprojekt und
Anlagenbau Berlin
Rhinstrasse 100
DDR-1140 Berlin(DD)**

(72) Erfinder: **Gibas, Peter, Dr.
Schirmerstrasse 1
DDR-7050 Leipzig(DD)**
Erfinder: **Kriesel, Werner, Prof. Dr. sc. phil.
Rödelstrasse 5
DDR-7031 Leipzig(DD)**
Erfinder: **Kozub, Christoph
Karl-Liebknecht-Strasse 12
DDR-7113 Markkleeberg(DD)**
Erfinder: **Blanke, Wolfgang
Kurt-Tucholsky-Strasse 8/1004
DDR-7030 Leipzig(DD)**
Erfinder: **Hess, Frank
Altenhainer Strasse 5 a
DDR-9023 Karl-Marx-Stadt(DD)**
Erfinder: **Schnelle, Olaf
Philipp-Rosenthal-Strasse 22
DDR-7010 Leipzig(DD)**
Erfinder: **Helm, Peter
Christoph-Probst-Strasse 5
DDR-7026 Leipzig(DD)**
Erfinder: **Rohbeck, Volker
Sachsenstrasse 9
DDR-7050 Leipzig(DD)**

(74) Vertreter: **Patentanwälte Beetz sen. - Beetz
jun. Timpe - Siegfried - Schmitt-Fumian
Steinsdorfstrasse 10
D-8000 München 22(DE)**

(54) **Verfahren und Vorrichtung zur Informationsübertragung in Mehrrechnersystemen mit hierarchisch gegliedertem Übertragungsnetzwerk.**

(57) Bei dieser Anordnung und bei diesem Verfahren zur Informationsübertragung ist eine Vielzahl von Teilnehmerstationen (a) mit eigener Informationsverarbeitungskapazität in Gruppenbusse ($A_1$ -$A_n$) aufgeteilt sind, die über ein hierarchisch übergeordnetes Bussystem (B) verbunden sind.

Zur Verbesserung der Rekonfigurierbarkeit, zur Entwurfsmöglichkeit nach Echtzeitanforderungen und der Optimierung durch Computersimulation in bezug auf Topologie, Zuverlässikeit und Verfügbarkeit sowie auf die Reaktionszeit einer Automatisierungsanlage, ist in jedem Gruppenbus ($A_j$) eine gleich-

berechtigte Leitstation ($c_j$) eingefügt, und mit dem übergeordneten Bussystem (B) derart verbunden, daß durch sie Informationen über den Zustand der Funktionseinheiten (a) speicherbar sind. Auf einen Speicher (1, 6, 7, 8) der Leitstation (c) kann zeitlich wahlfrei und ohne gegenseitige Beeinflussung von Seiten des jeweiligen Gruppenbusses (A) oder des übergeordneten Bussystems (B) zugegriffen werden. Durch jede Leitstation ($c_j$) sind Datentelegramme für die Funktionseinheiten (a) in anderen Gruppenbussen (A) über das übergeordnete Bussystem (B) weiterleitbar.

Fig 1

## Verfahren und Vorrichtung zur Informationsübertragung in Mehrrechnersystemen mit hierarchisch gegliedertem Übertragungsnetzwerk

Die Erfindung betrifft ein Verfahren und eine Vorrichtung zur Informationsübertragung in Mehrrechnersystemen mit hierarchisch gegliedertem Übertragungsnetzwerk, über das eine Vielzahl intelligenter Teilnehmerstationen mit eigener Informationsverarbeitungskapazität Daten austauscht, und ist insbesondere bei Automatisierungsanlagen mit einem hohen Anteil an dezentralen Komponenten vorteilhaft einsetzbar. Die Teilnehmerstationen sind in Gruppen aufgeteilt und tauschen unter sich über jeweilige Gruppenbusse Informationen aus. Die Gruppenbusse sind durch ein hierarchisch übergeordnetes Bussystem verbunden.

Ausgehend von anfangs verwendeten sternförmigen Informationsübertragungsstrukturen für Automatisierungsanlagen erfolgte der Übergang zu linienförmigen Busstrukturen und Ringstrukturen. Darauf aufbauend entwickelte sich in den am weitesten fortgeschrittenen Automatisierungsanlagensystemen eine netzförmige Informationsübertragungs struktur aus Linienstrukturen. Hinsichtlich der Steuerung der Informationsübertragung ist der Übergang von der zentralen zur dezentralen Steuerung zu verzeichnen. Dabei verschiebt sich das zur Zeit noch vorhandene Übergewicht der konkurrierenden Zugriffsverfahren, bei denen die einzelnen Teilnehmer beim Zugriff zum jeweiligen Bus in Konkurrenz stehen, unter den Erfordernissen des Echtzeitbetriebes zugunsten der deterministischen Zugriffsverfahren, bei denen den einzelnen Teilnehmern die Sendeberechtigung in jeweils bestimmten Zeitabschnitten zugeteilt wird.

Die Entwicklung der Automatisierungsanlagen zeigt eindeutig den Trend zu hierarchisch aufgebauten, räumlich verteilten Systemen aus Komponenten mit eigener Informationsverarbeitungskapazität. Der Vorteil derartiger Systeme liegt vor allem in der relativen Autonomie der technologischen Teilprozesse, in der Verbesserung der Zuverlässigkeit und Verfügbarkeit gegenüber zentralen Systemen, und in einer besseren Transparenz der Anlagentopologie gegenüber dem technologischen Prozeß. Des weiteren erleichtern solche Systeme Änderungen und Erweiterungen in Automatisierungsanlagen. Entsprechend den spezifischen Anforderungen an Prozeßautomatisierungssysteme entstehen bei hierarchisch strukturierten, räumlich verteilten Systemen neue Forderungen an das verwendete Informationsübertragungssystem. Diese bestehen insbesondere in einer möglichst niedrigen Übertragungsfehlerrate, einer dynamischen Rekonfigurierbarkeit bei Ausfall einzelner Komponenten durch die Verwendung einer fehlertoleranten Informationsübertragung. Weitere Forderungen bestehen in der leichten Anpaßbarkeit der Automatisierungsanlagen an Veränderungen des technologischen Prozesses bzw. an einer Optimierung der Automatisierungskonzeption und der Gewährleistung der Echtzeitanforderung, die sich in der Einhaltung von projektierbaren Grenzen von Verzögerungszeiten für die Über tragung von Informationen zwischen einzelnen Funktionseinheiten äußern. Diese Forderungen insgesamt können von derzeitig vorhandenen Prozeßautomatisierungssystemen nur ungenügend erfüllt werden.

Hier will die Erfindung Abhilfe schaffen. Aufgabe der Erfindung ist deshalb ein Verfahren und eine Vorrichtung zur Informationsübertragung in hierarchisch. gegliederten Mehrrechnersystemen, insbesondere Automatisierungsanlagen zu - schaffen, wobei die Rekonfigurierbarkeit, die Projektierbarkeit nach Echtzeitforderungen und die Optimierung durch Computersimulation in bezug auf Topologie, Zuverlässigkeit und Verfügbarkeit weiter verbessert werden sollen.

Ferner soll die Reaktionszeit unter Berücksichtigung der Echtzeitanforderungen der Automatisierungsanlage weiter verbessert werden.

Zur Lösung der obigen Aufgabe wird erfindungsgemäß ein Verfahren zur Datenübertragung in Mehrrechnersystemen mit hierarchisch gegliedertem Übertragungsnetzwerk, über das eine Vielzahl von intelligenten Teilnehmerstationen mit eigener Informationsverarbeitungskapazität Informationen austauschen, wobei die Teilnehmerstationen unter sich in Gruppen aufgeteilt und über jeweilige Gruppenbusse Daten austauschen, und die Gruppenbusse durch ein hierarchisch übergeordnetes Bussystem verbunden sind, angegeben, das durch folgende Schritte gekennzeichnet ist:

-Einschreiben von durch eine jeweils sendeberechtigte Teilnehmerstation eines jeweiligen Gruppenbusses ausgesendeten Informationen in einen Speicher einer diesen Gruppenbus mit dem übergeordneten Bussystem verbindenden Leitstation, und/oder

-Einschreiben von durch das übergeordnete Bussystem übertragenen Informationen in den Speicher der dem jeweiligen Gruppenbus zugeordneten Leitstation, wenn diese Information für in diesem Gruppenbus angeschlossene Teilnehmerstationen bestimmt ist;

-Weitersenden der vom eigenen Gruppenbus in den Speicher der Leitstation eingespeicherten Information an die Leitstationen der anderen Gruppenbusse oder an hierarchisch übergeordnete Funktionseinheiten im übergeordneten Bussystem; und

-Weitersenden der vom übergeordneten Bussystem empfangenen und eingespeicherten Informationen durch den eigenen Gruppenbus an die Teilnehmerstationen, für die diese Information bestimmt ist.

Das erfindungsgemäße Verfahren wird vorteilhafterweise dadurch weiter gebildet, daß die Sendeberechtigung der Teilnehmerstationen eines jeweiligen Gruppenbusses und der diesem Gruppenbus zugeordneten Leitstation in einem ersten vorbestimmten Zeitzyklus innerhalb des Gruppenbusses zyklisch umläuft, so daß durch die Leitstation innerhalb des ersten Zeitzyklus alle Informationen über den Zustand der Teilnehmerstationen des jeweiligen Gruppenbusses bzw. deren gesendete Informationen speicherbar sind.

Weiterhin wird das erfindungsgemäße Verfahren dadurch weiter gebildet, daß die Sendeberechtigung den durch das übergeordnete Bussystem verbundenen Leitstationen und übergeordneten Funktionseinheiten innerhalb eines zweiten vorbestimmten Zeitzyklus zugeteilt wird und daß die Zuteilung der Sendeberechtigung innerhalb dieses zweiten Zeitzyklus im übergeordneten Bussystem einmal umläuft.

Die Zeitzyklen für die Gruppenbusse und für das übergeordnete Bussystem werden aufgrund der jeweiligen Datentelegrammlänge, der Anzahl der Teilnehmerstationen bzw. Funktionseinheiten in den Gruppenbussen bzw. dem übergeordneten Bussystem, der Signallaufzeiten zwischen den einzelnen Teilnehmerstationen bzw. Funktionseinheiten sowie den Echtzeitanforderungen vorbestimmt.

Die die obige Aufgabe lösende Vorrichtung zur Datenübertragung in Mehrrechnersystemen mit hierarchisch gegliedertem Übertragungsnetzwerk mit einer Vielzahl von intelligenten Teilnehmerstationen mit eigener Informationsverarbeitungskapazität, die in Gruppen aufgeteilt sind, und unter sich über jeweilige Gruppenbusse Daten austauschen, wobei die Gruppenbusse durch ein übergeordnetes Bussystem verbunden sind, ist erfindungsgemäß dadurch gekennzeichnet, daß in jeden Gruppenbus eine Leitstation eingefügt ist, die mit den Teilnehmerstationen dieser Gruppe gleichberechtigt ist und den Informationsaustausch der Gruppenbusse mit dem übergeordneten Bussystem und umgekehrt steuert, derart, daß die jeweilige Leitstation Informationen über den Zustand der Teilnehmerstationen des jeweiligen Gruppenbusses bzw. deren gesendete Information speichert, wobei ein Speicher der Leitstation ein Speicher mit wahlfreiem Zugriff ist, zu dem ohne gegenseitige Beeinflussung von Seiten des jeweiligen Gruppenbusses oder des übergeordneten Bussystems zugegriffen werden kann und jede Leitstation Datentelegramme für die Teilnehmerstationen in anderen Gruppen durch das übergeordnete Bussystem weiterleitet.

Die erfindungsgemäße Vorrichtung wird vorteilhafterweise dadurch weitergebildet, daß die Leitstationen im übergeordneten Bussystem mit übergeordneten Funktionseinheiten verbunden sind.

Jede Leitstation besitzt vorteilhafterweise eine Leiteinrichtung, mit der Leitfunktionen für die Teilnehmerstationen eines Gruppenbusses generierbar sind.

Das übergeordnete Bussystem ist vorteilhafterweise mit einer Leitstation versehen, über die das übergeordnete Bussystem mit weiteren Hierarchieebenen verbunden ist.

Die Leitstationen bestehen vorteilhafterweise aus Buskopplungsbausteinen, Speichern und aus einer Speichersteuer-und Datenflußsteuereinrichtung, wobei die Speichersteuer-und Datenflußsteuereinrichtung mit den Buskopplungsbausteinen und mit der Leiteinrichtung verbunden ist.

Vorteilhafterweise weist das übergeordnete Bussystem Ringstruktur auf.

Auch die Gruppenbusse haben vorteilhafterweise Ringstruktur.

Vorteilhafterweise haben die Bussysteme jeweils eine Doppelringstruktur, wobei die Datenübertragung durch die parallel laufenden Einzelringbusse in entgegengesetzten Richtungen erfolgt und die Leitstationen die Datenübertragung nach vorgegebenen Kriterien in die eine oder andere Richtung leiten.

Durch die beliebige Austauschbarkeit von Teilnehmern, die sich nur auf Änderungen in der Software von Adressenkodern auswirkt, wird eine Optimierung der Informationsübertragungsstruktur durch Computersimulation möglich, z. B. hinsichtlich der Minimierung des Informationstransfers zwischen den Gruppenbussen, der Einhaltung bestimmter Echtzeitforderungen und Reaktionszeiten und der Berücksichtigung von topologischen und Zuverlässigkeitsforderungen. Ausgangspunkt kann dabei eine Basislösung sein, die nur von der Topologie ausgeht. Durch die Optimierung können dann Funktionseinheiten auch anders zugeordnet werden.

Im folgenden wird die Erfindung anhand von Zeichnungen näher erläutert, die ein Ausführungsbeispiel darstellen. Es zeigen:

Fig. 1 eine Struktur eines Übertragungsnetzwerks mit Ringbussystemen, und

Fig. 2 den Aufbau einer der Leitstationen in Fig. 1.

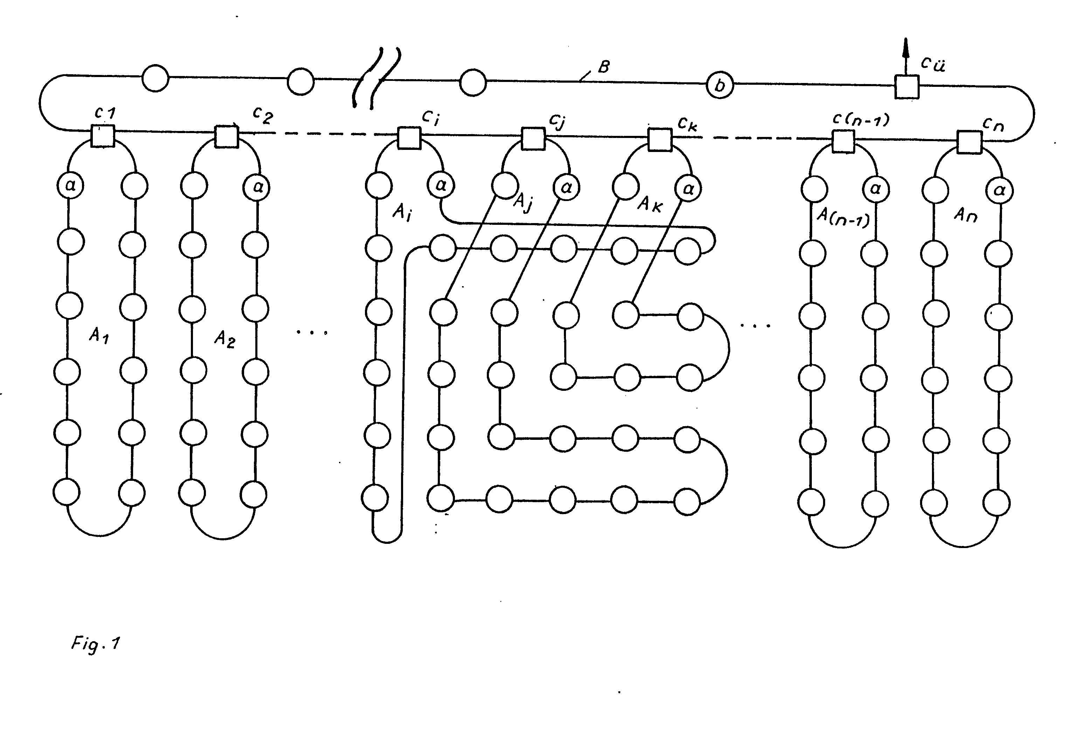

Wie die Figur 1 zeigt, ist die Gesamtmenge der Teilnehmerstationen bzw. Funktionseinheiten a des Mehr rechnersystems in Gruppenbusse $A_1$ bis $A_n$ aufgeteilt. Die Funktionseinheiten a eines Gruppenbusses $A_j$ sind über ein hierarchisch übergeordnetes Bussystem B miteinander verbunden, das in Fig. 1 als Ringbussystem dargestellt ist. Ein Ringbussystem ist vorteilhaft, wenn eine möglichst geringe Übertragungszeit und die Kontrolle der ausgesendeten Daten durch die Sendestation gefordert sind. Die Verbindung der Gruppenbusse $A_1$ bis $A_n$ mit dem übergeordneten Ringbussystem B erfolgt über je eine in jeden Gruppenbus A eingefügte Koppel-Speicher-Leitstation $C_1$ bis $C_4$. In dieses übergeordnete Ringbussystem B können zusätzlich analog den Funktionseinheiten a der Gruppenbusse A übergeordnete Funktionseinheiten b eingefügt sein. Außerdem können auch die Leitstationen c mit übergeordneten Übertragungswegen bzw. Komponenten verbunden sein. In der Fig. 1 ist das durch die Leitstation $C_\ddot{u}$ angedeutet.

Vorteilhafterweise besteht innerhalb jedes Gruppenbusses A und des übergeordneten Ringbussystems B ein deterministisches Zugriffsverfahren mit zyklisch umlaufendem Zugriffsrecht, bei dem den einzelnen Funktionseinheiten die Sendeberechtigung in jeweils bestimmten Zeitabschnitten zugeteilt wird. Das bedeutet, daß innerhalb eines bestimmten Zeitzyklus jeder Funktionseinheit a bzw. jeder hierarchisch übergeordneten Funktionseinheit b im übergeordneten Ringbussystem B genau einmal das Senderecht erteilt wird. Die zyklisch umlaufende Erteilung des Senderechts erfolgt in den einzelnen Gruppenbussen A sowie in den hierarchisch übergeordneten Ringbussystem B unabhängig voneinander. Innerhalb jedes Gruppenbusses A ist die Leitstation c gleichberechtigt gegenüber den Funktionseinheiten ab. Die Gleichberechtigung bewirkt, daß während eines Zeitzyklus auch die Leitstation c einmal das Senderecht erhält. Während der Sendezeit einer Funktionseinheit a sind alle anderen Funktionseinheiten a des jeweiligen Gruppenbusses A und die Leitstation c hörende Teilnehmer. Die Zeitdauer, in der jede Funktions einheit a des jeweiligen Gruppenbusses, einschließlich der Leitstation c genau einmal das Senderecht erhält, wird somit bei fester Datentelegrammlänge bestimmbar. Innerhalb des jeweiligen Gruppenbusses A wird diese Zeitdauer durch die Gruppenübertragungskonstante $\Delta t_A$ repräsentiert.

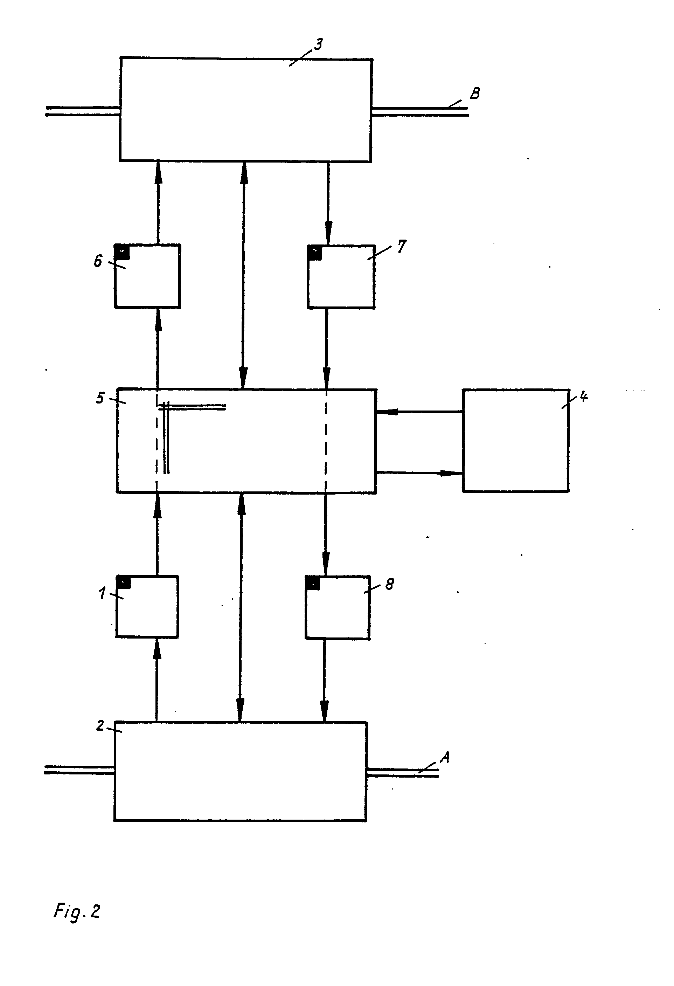

Aus Fig. 2 ist ersichtlich, daß die Leitstation c jedes Gruppenbusses A über einen Speicher 1 verfügt, der während eines Zeitzyklus $\Delta t_A$ alle Informationen über den Zustand der Funktionseinheiten a des Gruppenbusses A bzw. deren gesendete Informationen speichert. Mittels der mit den Buskopplungsbausteinen 2; 3 und mit der Leiteinrichtung 4 verbundenen Speichersteuer-und Datenflußsteuereinrichtung 5 der Leitstation c werden die Daten, die zur Weitergabe aus dem Gruppenbus A bestimmt sind, aus dem Speicher 1 in einen Speicher 6 übertragen.

Innerhalb des übergeordneten Ringbussystems B ist die Datenweitergabe analog der der Gruppenbusse A organisiert. Demzufolge erhält entsprechend der Vergabe des Senderechts jede Leitstation c innerhalb eines bestimmten Zeitzyklus einmal das Senderecht im hierarchisch übergeordneten Ringbussystem B. Die Dauer dieses Zeitzyklus wird durch die Übertragungszeitkonstante $\Delta t_B$ des übergeordneten Ringbussystems B repräsentiert.

Während dieses Zeitzyklus sind alle anderen Leitstationen c sowie alle hierarchisch übergeordneten Funktionseinheiten b hörende Teilnehmer. Während der Sendezeit werden alle im Speicher 6 gespeicherten Informationen an das übergeordnete Ringbussystem B abgegeben. Am Adreßteil des Datentelegrammes erkennen die anderen Leitstationen c, ob die Information für ihren Gruppenbus A bestimmt ist. Die Leitstation c des Gruppenbusses A, für die die Information bestimmt ist, speichert diese in ihrem Speicher 7. Durch die Speichersteuer-und Datenflußsteuereinrichtung 5 werden die Informationen, die für eine Funktionseinheit a des Gruppenbusses A bestimmt sind, in den Speicher 8 übertragen und bei Erlangung des Senderechtes innerhalb des Gruppenbusses A gesendet. Am Adreßteil des Datentelegrammes erkennt die entsprechende Funktionseinheit a des Gruppenbusses A, ob die Information für sie bestimmt ist.

Auf Grund dieser Informationsübertragungsstruktur läßt sich die maximale Übertragungszeit von einer Funktionseinheit a eines Gruppenbusses A zu einer beliebigen Funktionseinheit a eines anderen Gruppenbusses A bestimmen. Die maximale Übertragungszeit $T_{\ddot{u}}$ max für die Übertragung einer Information aus dem Gruppenbus $A_1$ für eine Funktionseinheit a des Gruppenbusses $A_n$ ermittelt sich demzufolge nach der Gleichung

$$T_{\ddot{u}}\ max = \Delta t_{A_1} + \Delta t_B + \Delta t_{A_n}$$

Hierbei ist

$T_{\ddot{u}}\ max =$

maximale Übertragungszeit von einer Funktionseinheit a eines Gruppenbusses A zu einer beliebigen Funktionseinheit eines anderen Gruppenbusses A,

$\Delta t_{A_1} =$

Gruppenübertragungszeitkonstante, des Gruppenbusses A, deren Funktionseinheit a eine Information sendet,

$\Delta t_B =$

Übertragungszeitkonstante des hierarchisch übergeordneten Ringbussystems B,

$\Delta t_{A_0} =$

Gruppenübertragungszeitkonstante des Gruppenbusses A, für deren Funktionseinheit a die gesendete Information bestimmt ist.

Die Informationsübertragung zwischen einer beliebigen Funktionseinheit a eines Gruppenbusses A und einer hierarchisch übergeordneten Funktionseinheit b vollzieht sich analog. Die maximale Übertragungszeit ermittelt sich dabei nach folgender Beziehung:

$T_{ij} \, max = \Delta t_B + \Delta t_A$

Im Gegensatz zu bekannten Informationsübertragungssystemen wird bei dem hier beschriebenen System die maximale Übertragungszeit einer Information von einer beliebigen Funktionseinheit eines Gruppenbusses an jede beliebige Funktionseinheit eines anderen Gruppenbusses bestimmbar. Sie ergibt sich aus der Summe der Übertragungszeitkonstante des Gruppenbusses, deren Funktionseinheit die Nachricht sendet, der Übertragungszeitkonstante des übergeordneten Bussystems und der Übertragungszeitkonstante des Gruppenbusses, für deren Funktionseinheit die Nachricht bestimmt ist.

Der wesentliche Vorteil der erfindungsgemäßen Informationsübertragungsstruktur besteht darin, daß determinierbare Reaktionszeiten als eine der wesentlichen Kriterien für den Echtzeitbetrieb in Prozeßautomatisierungsanlagen projektierbar werden. Die maximale Übertragungszeit von beliebigen Funktionseinheiten untereinander wird eindeutig bestimmbar.

Die erfindungsgemäße Vorrichtung zur Datenübertragung in Mehrrechnersystemen mit hierarchisch gegliedertem Übertragungsnetzwerk wurde anhand eines Ringbussystems und ein deterministisches Zugriffsverfahren verwendendes Prozeßautomatisierungssystem mit besonders ausgeprägten Echtzeitanforderungen beschrieben.

Das Prinzip der Erfindung läßt sich jedoch auch auf Mehrrechnersysteme mit hierarchisch gegliedertem Übertragungsnetzwerk anwenden, bei denen ein anderes Zugriffsverfahren und eine andere Busstruktur, z. B. eine Linien struktur oder eine Doppelringstruktur mit entgegengesetzten Übertragungsrichtungen und Umschaltmöglichkeit der Richtung durch die Leitstationen zur Erhöhung der Ausfallsicherheit, vorhanden sind.

**Ansprüche**

1. Verfahren zur Datenübertragung in Mehrrechnersystemen mit hierarchisch gegliedertem Übertragungsnetzwerk, über das eine Vielzahl von intelligenten Teilnehmerstationen mit eigener Informationsverarbeitungskapazität Informationen austauschen, wobei die Teilnehmerstationen unter sich in Gruppen aufgeteilt und über jeweilige Gruppenbusse Daten austauschen, und die Gruppenbusse durch ein hierarchisch übergeordnetes Bussystem verbunden sind,

**gekennzeichnet durch**

folgende Schritte:

-Einschreiben von durch eine jeweils sendeberechtigte Teilnehmerstation eines jeweiligen Gruppenbusses ausgesendeten Informationen in einen Speicher einer diesen Gruppenbus mit dem übergeordneten Bussystem verbindenden Leitstation, und/oder

-Einschreiben von durch das übergeordnete Bussystem übertragenen Informationen in den Speicher der dem jeweiligen Gruppenbus zugeordneten Leitstation, wenn diese Information für in diesem Gruppenbus angeschlossene Teilnehmerstationen bestimmt ist;

-Weitersenden der vom eigenen Gruppenbus in den Speicher der Leitstation eingespeicherten Information an die Leitstationen der anderen Gruppenbusse oder an hierarchisch übergeordnete Funktionseinheiten im übergeordneten Bussystem; und

-Weitersenden der vom übergeordneten Bussystem empfangenen und eingespeicherten Informationen durch den eigenen Gruppenbus an die Teilnehmerstationen, für die diese Information bestimmt ist.

2. Verfahren nach Anspruch 1,

**dadurch gekennzeichnet,** daß die Sendeberechtigung der jeweiligen Teilnehmerstationen eines jeweiligen Gruppenbusses und der dem Gruppenbus zugeordneten Leitstation in einem ersten vorbestimmten Zeitzyklus innerhalb des Gruppenbusses zyklisch umläuft, so daß durch die Leitstation innerhalb des ersten Zeitzyklus alle Informationen über den Zustand der Teilnehmerstationen des jeweiligen Gruppenbusses bzw. deren gesendete Informationen speicherbar sind.

3. Verfahren nach Anspruch 1 oder 2,

**dadurch gekennzeichnet,** daß die Sendeberechtigung den durch das übergeordnete Bussystem verbundenen Leitstationen und übergeordneten Funktionseinheiten innerhalb eines zweiten vorbestimmten Zeitzyklus zugeteilt wird und daß die Zuteilung der Sendeberechtigung innerhalb dieses zweiten Zeitzyklus im übergeordneten Bussystem einmal umläuft.

4. Verfahren nach einem der Ansprüche 2 oder 3,

**dadurch gekennzeichnet,** daß die der Zuteilung der Sendeberechtigung zugrunde gelegten Zeitzyklen für die Gruppenbusse und für das übergeordnete Bussystem aufgrund der jeweiligen Datentelegrammlänge, der Anzahl der Teilnehmerstationen bzw. Funktionseinheiten in den Gruppenbussen bzw. dem übergeordneten Bussystem, der Signallaufzeiten zwischen den einzelnen Teilnehmerstationen bzw. Funktionseinheiten sowie von Echtzeitanforderungen vorbestimmt werden.

5. Vorrichtung zur Datenübertragung in Mehrrechnersystemen mit hierarchisch gegliedertem Übertragungsnetzwerk mit einer Vielzahl von intelligenten Teilnehmerstationen (a) mit eigener Informationsverarbeitungskapazität, die in Gruppen aufgeteilt sind, und unter sich über jeweilige Gruppenbusse ($A_1$ -$A_n$) Daten austauschen, wobei die Gruppenbusse durch ein übergeordnetes Bussystem (B) verbunden sind,

**dadurch gekennzeichnet,** daß

in jeden Gruppenbus ($A_1$ -$A_n$) eine Leitstation ($c_1$ -$c_n$) eingefügt ist, die mit den Teilnehmerstationen dieser Gruppe gleichberechtigt ist und den Informationsaustausch der Gruppenbusse mit dem übergeordneten Bussystem (B) und umgekehrt steuert, derart, daß die jeweilige Leitstation ($c_j$) Informationen über den Zustand der Teilnehmerstationen (a) des jeweiligen Gruppenbusses ($A_j$) bzw. deren gesendete Information speichert, wobei ein Speicher (1, 6, 7, 8) der Leitstation (c) ein Speicher mit wahlfreiem Zugriff ist, zu dem ohne gegenseitige Beeinflussung von Seiten des jeweiligen Gruppenbusses ($A_j$) oder des übergeordneten Bussystems (B) zugegriffen werden kann, und jede Leitstation (c) Datentelegramme für die Teilnehmerstationen in anderen Gruppen durch das übergeordnete Bussystem (B) weiterleitet.

6. Vorrichtung nach Anspruch 5,

**dadurch gekennzeichnet,** daß

die Leitstationen ($c_1$ -$c_n$) im übergeordneten Bussystem (B) mit übergeordneten Funktionseinheiten (b) verbunden sind.

7. Vorrichtung nach Anspruch 5 oder 6,

**dadurch gekennzeichnet,** daß

jede Leitstation (c) eine Leiteinrichtung (4) besitzt, mit der Leitfunktionen für die Teilnehmerstationen eines Gruppenbusses (A) generierbar sind.

8. Vorrichtung nach einem der Ansprüche 5 bis 7,

**dadurch gekennzeichnet,** daß

das übergeordnete Bussystem (B) mit einer Leitstation ($c_{ij}$) versehen ist, über die das übergeordnete Bussystem (B) mit weiteren Hierarchieebenen verbunden ist.

9. Vorrichtung nach einem der Ansprüche 5 bis 8,

**dadurch gekennzeichnet,** daß

die Leitstationen (c, $c_{ij}$) aus Buskopplungsbausteinen (2, 3), Speichern (1, 6, 7, 8) und aus einer Speichersteuer-und Datenflußsteuereinrichtung (5) bestehen, wobei die Speicher steuer-und Datenflußsteuereinrichtung (5) mit den Buskopplungsbausteinen (2, 3) und mit der Leiteinrichtung (4) verbunden ist.

10. Vorrichtung nach einem der Ansprüche 5 bis 9,

**dadurch gekennzeichnet,** daß

das übergeordnete Bussystem (B) Ringstruktur hat.

11. Vorrichtung nach einem der Ansprüche 5 bis 10,

**dadurch gekennzeichnet,** daß

die Gruppenbusse (A) Ringstruktur haben.

12. Vorrichtung nach einem der Ansprüche 10 oder 11,

**dadurch gekennzeichnet,** daß

die Bussysteme (A bzw. B) jeweils eine Doppelringstruktur haben, wobei die Datenübertragung durch die parallel laufenden Einzelringbusse in entgegengesetzten Richtungen erfolgt und die Leitstationen die Datenübertragung nach vorgegebenen Kriterien in die eine oder andere Richtung leiten.

Fig.1

0 242 765

0 242 765

Fig. 2